# EUROPEAN PATENT APPLICATION

(11) **EP 4 838 487 A1**
(43) Date of publication of application: **11.11.2026**
(21) Application number: 26204333.4
(22) Date of filing: 10.09.2026
(51) Int. Cl.: G06V 20/10, A47L 9/28, G01N 21/94

(54) **CONTAMINANT IDENTIFICATION METHOD, CLEANING STRATEGY GENERATION METHOD AND APPARATUS, STORAGE MEDIUM, AND ELECTRONIC DEVICE**

(30) Priority: 13.08.2026 SG 10202602820
(71) Applicant: XG TECH PTE. LTD., Singapore 179098 (SG)
(72) Inventor: LIN, Tao, 179098 SINGAPORE (SG); HUANG, Jingchang, 179098 Singapore (SG)
(74) Representative: Dehns Germany Partnerschaft mbB

(57) **Abstract**

The present disclosure provides a contaminant identification method, a cleaning strategy generation method and apparatus, a storage medium, and an electronic device. First, initial observation data acquired by a first observation device by observing a target environment are obtained (S110), and identification is performed (S120) on the initial observation data to obtain an initial identification result for a to-be-identified contaminant and first credibility evaluation information, and then a first credibility score is determined (S130) based on the first credibility evaluation information. **In** response to the first credibility score being less than a preset threshold, a supplementary observation strategy is determined (S140) based on the initial identification result and the first credibility evaluation information, and the supplementary observation strategy is executed to obtain supplementary observation data. Finally, a final identification result for the to-be-identified contaminant is determined based on the initial observation data and the supplementary observation data.

## Description

### TECHNICAL FIELD

The present disclosure relates to the technical field of smart home, and in particular to a contaminant identification method, a cleaning strategy generation method and apparatus, a storage medium, and an electronic device.

### BACKGROUND

In the technical field of smart home, a smart cleaning device (such as a robot vacuum, a robot vacuum and mop, etc.) may clean the floor of its environment. At present, some smart cleaning devices may identify contaminants in the environment to perform operations such as cleaning. Affected by factors such as ambient lighting and line-of-sight occlusion, accuracy of contaminant identification by smart cleaning devices is not high.

### SUMMARY

Embodiments of the present disclosure provide a contaminant identification method, a cleaning strategy generation method and apparatus, a storage medium, and an electronic device, capable of actively obtaining supplementary observation data when credibility of contaminant identification is insufficient, and determining a final identification result based on the initial observation data and the supplementary observation data, thereby improving accuracy of contaminant identification.

In a first aspect, embodiments of the present disclosure provide a contaminant identification method, the method comprising:
obtaining initial observation data acquired by a first observation device by observing a target environment;
performing identification on the initial observation data to obtain an initial identification result for a to-be-identified contaminant in the target environment and first credibility evaluation information for the to-be-identified contaminant;
determining a first credibility score of the to-be-identified contaminant based on the first credibility evaluation information;
in response to the first credibility score being less than a preset threshold, determining a supplementary observation strategy based on the initial identification result and the first credibility evaluation information;
executing the supplementary observation strategy to obtain supplementary observation data for the to-be-identified contaminant; and
determining a final identification result for the to-be-identified contaminant based on the initial observation data and the supplementary observation data.

In a second aspect, embodiments of the present disclosure provide a cleaning strategy generation method, the method comprising:
obtaining a final identification result for a to-be-identified contaminant according to the contaminant identification method of the first aspect;
determining reality of the to-be-identified contaminant based on the final identification result;
in response to the to-be-identified contaminant being a real contaminant, determining a position and a type of the real contaminant based on the final identification result; and
generating a cleaning strategy for a cleaning device based on the position and the type of the real contaminant.

In a third aspect, embodiments of the present disclosure provide a contaminant identification apparatus, the apparatus comprising:
a first obtaining module, configured to obtain initial observation data acquired by a first observation device by observing a target environment;
an identification module, configured to perform identification on the initial observation data to obtain an initial identification result for a to-be-identified contaminant in the target environment and first credibility evaluation information for the to-be-identified contaminant;
a first determination module, configured to determine a first credibility score of the to-be-identified contaminant based on the first credibility evaluation information;
a second determination module, configured to, in response to the first credibility score being less than a preset threshold, determine a supplementary observation strategy based on the initial identification result and the first credibility evaluation information;
an execution module, configured to execute the supplementary observation strategy to obtain supplementary observation data for the to-be-identified contaminant; and
a third determination module, configured to determine a final identification result for the to-be-identified contaminant based on the initial observation data and the supplementary observation data.

In a fourth aspect, embodiments of the present disclosure provide a cleaning strategy generation apparatus, the apparatus comprising:
a second obtaining module, configured to obtain a final identification result for a to-be-identified contaminant according to the contaminant identification method of the first aspect;
a fourth determination module, configured to determine reality of the to-be-identified contaminant based on the final identification result;
a fifth determination module, configured to, in response to the to-be-identified contaminant being a real contaminant, determine a position and a type of the real contaminant based on the final identification result; and
a generation module, configured to generate a cleaning strategy for a cleaning device based on the position and the type of the real contaminant.

In a fifth aspect, embodiments of the present disclosure provide an electronic device, the electronic device comprising a processor and a memory for storing processor-executable instructions. The processor is configured to read the executable instructions from the memory and execute the instructions to implement the contaminant identification method of the first aspect, and/or the cleaning strategy generation method of the second aspect.

In a sixth aspect, embodiments of the present disclosure provide a computer-readable storage medium, the storage medium storing a computer program, the computer program being configured to execute the contaminant identification method of the first aspect, and/or the cleaning strategy generation method of the second aspect.

In a seventh aspect, embodiments of the present disclosure provide a computer program product, the computer program product comprising computer program instructions; when executed by a processor, the computer program instructions causing the processor to execute the contaminant identification method of the first aspect, and/or the cleaning strategy generation method of the second aspect.

In the technical solution according to embodiments of the present disclosure, first, initial observation data acquired by a first observation device by observing a target environment are obtained, and identification is performed on the initial observation data to obtain an initial identification result for a to-be-identified contaminant and first credibility evaluation information, and then a first credibility score is determined based on the first credibility evaluation information. In response to the first credibility score being less than a preset threshold, a supplementary observation strategy is determined based on the initial identification result and the first credibility evaluation information, and the supplementary observation strategy is executed to obtain supplementary observation data. Finally, a final identification result for the to-be-identified contaminant is determined based on the initial observation data and the supplementary observation data. Credibility of the initial identification result is evaluated by introducing the first credibility evaluation information, and when a credibility score is insufficient, a supplementary observation strategy is proactively determined and executed to obtain supplementary observation data; then, a final identification result is determined based on the initial observation data and the supplementary observation data, overcoming the problem of low identification accuracy caused by factors such as ambient lighting and line-of-sight occlusion at a single observation viewing angle, effectively improving accuracy and reliability of contaminant identification.

### BRIEF DESCRIPTION OF THE DRAWINGS

FIG. 1 is a schematic structural diagram of a cleaning system according to an embodiment of the present disclosure.
FIG. 2 is a schematic architectural diagram of a control device in the cleaning system according to an embodiment of the present disclosure.
FIG. 3 is a schematic flowchart of a contaminant identification method according to an embodiment of the present disclosure.
FIG. 4 is a schematic flowchart of step S130 of the contaminant identification method according to an embodiment of the present disclosure.
FIG. 5 is a schematic flowchart of step S140 of the contaminant identification method according to an embodiment of the present disclosure.
FIG. 6 is a schematic flowchart of step S142 of the contaminant identification method according to an embodiment of the present disclosure.
FIG. 7 is a schematic flowchart of step S143 of the contaminant identification method according to an embodiment of the present disclosure.
FIG. 8 is another schematic flowchart of step S143 of the contaminant identification method according to an embodiment of the present disclosure.
FIG. 9 is a schematic flowchart of step S160 of the contaminant identification method according to an embodiment of the present disclosure.
FIG. 10 is a schematic flowchart of a cleaning strategy generation method according to an embodiment of the present disclosure.
FIG. 11 is a schematic structural diagram of a contaminant identification apparatus according to an embodiment of the present disclosure.
FIG. 12 is a schematic structural diagram of a cleaning strategy generation apparatus according to an embodiment of the present disclosure.
FIG. 13 is a schematic structural diagram of an electronic device according to an embodiment of the present disclosure.

### DETAILED DESCRIPTION

To explain the present disclosure, exemplary embodiments of the present disclosure are described in detail below with reference to the accompanying drawings. Clearly, the described embodiments are merely some, rather than all, of the embodiments of the present disclosure. It should be understood that the present disclosure is not limited by the exemplary embodiments.

It should be noted that unless otherwise specified, the relative arrangement, numerical expressions, and numerical values of components and steps set forth in these embodiments do not limit the scope of the present disclosure.

### Application Overview

In the technical field of smart home, a smart cleaning device, such as a robot vacuum, a robot vacuum and mop, etc., may autonomously plan a route to clean the floor of an environment, such as an indoor environment. During cleaning, the smart cleaning device typically needs to identify a contaminant in the environment to perform operations such as detouring, cleaning, and alerting. However, affected by factors such as ambient lighting, line-of-sight occlusion, low illumination, reflection, and low resolution, accuracy of contaminant identification by the smart cleaning device is not high, making it prone to false positives such as misidentifying a shadow, a toy, a sock, etc., as a contaminant, or misidentifying floor reflection as liquid, thus leading to unnecessary detouring and reduced cleaning efficiency.

In view of the above problem, embodiments of the present disclosure provide a contaminant identification method. After obtaining initial observation data and performing initial identification on a contaminant, the method introduces credibility evaluation information to quantitatively assess an initial identification result; when a credibility score is less than a preset threshold, proactively determines and executes a supplementary observation strategy to obtain supplementary observation data, and then determines a final identification result based on the initial observation data and the supplementary observation data, thereby improving accuracy and reliability of contaminant identification.

### Exemplary System

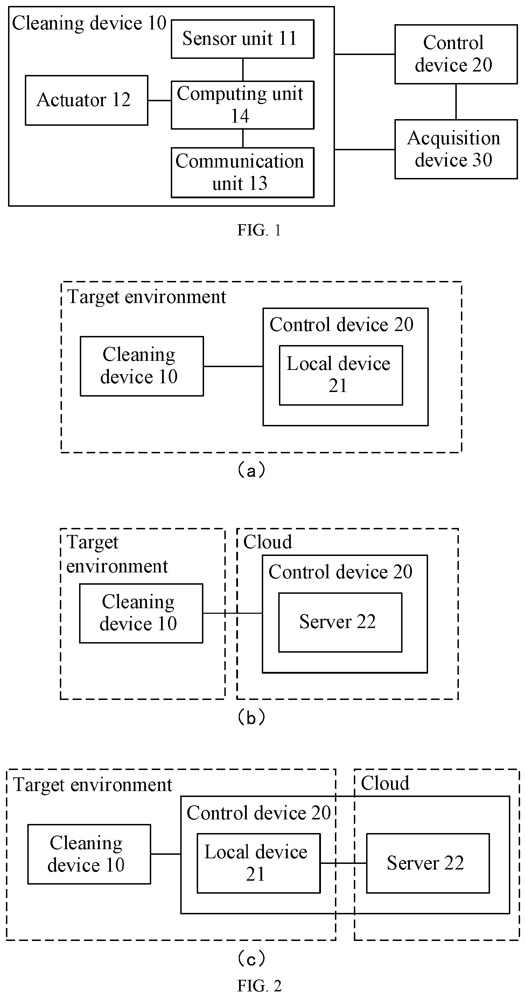

FIG. 1 is a schematic structural diagram of a cleaning system according to an embodiment of the present disclosure. As shown in FIG. 1, the contaminant identification method according to embodiments of the present disclosure is applicable to a cleaning system, the cleaning system comprises a cleaning device 10 and a control device 20. The cleaning device 10 may acquire environmental data in a target environment and perform a cleaning task. The control device 20 may perform data exchange with the cleaning device 10, for example, receive the environmental data acquired by the cleaning device 10, generate a contaminant identification result and a cleaning strategy based on the environmental data, send a cleaning instruction to the cleaning device 10 based on the cleaning strategy, etc.

In one implementation, the cleaning device 10 may be a device having mobility, such as a robot vacuum, a robot mop, a robot vacuum and mop, a cleaning service robot, etc. As shown in FIG. 1, the cleaning device 10 may comprise a sensor unit 11 and an actuator 12. The sensor unit 11 may comprise at least one of a vision sensor, a ranging sensor, an inertial sensor, and a status sensor. The vision sensor may be, for example, a Red-Green-Blue (RGB) camera, a depth camera, a panoramic camera, an infrared camera, etc., for acquiring environmental data of the target environment, such as an environmental image. The ranging sensor may be, for example, a lidar, a millimeter-wave radar, a time of flight (ToF) sensor, etc., for measuring a distance between the cleaning device 10 itself and an object in the target environment. The inertial sensor may be, for example, an inertial measurement unit (IMU), an odometer, etc., for performing pose estimation and dead reckoning for the cleaning device 10. The status sensor may be, for example, a cliff sensor, a collision sensor, a dust-box-full sensor, a water tank level sensor, a roller brush jam sensor, etc., for monitoring status of the cleaning device 10 and providing safety protection. The actuator 12 comprises a travel drive and a cleaning mechanism, wherein the travel drive may be, for example, a driving wheel or a universal wheel, and the cleaning mechanism may comprise at least one of a roller brush, a side brush, a suction motor, a mop cloth, a water pump, and a squeegee strip.

In embodiments of the present disclosure, the cleaning device 10 may serve as a first observation device for acquiring initial observation data and/or a second observation device for acquiring supplementary observation data, i.e., the first observation device and the second observation device may be the same or different.

In one implementation, the cleaning device 10 may further comprise a communication unit 13. The communication unit 13 may support a wired or wireless network communication mode such as Ethernet, Wireless Fidelity (Wi-Fi), Bluetooth, fifth-generation mobile communication (5G), fourth-generation mobile communication (4G), etc., for interacting with the control device 20.

In one implementation, the cleaning device 10 may further comprise a computing unit 14. The computing unit 14 may perform a task such as identification on the observed environmental data to obtain an identification result, and send the identification result to the control device 20. Exemplarily, an object detection model may be deployed in the cleaning device 10, and the computing unit 14 may comprise a processor, wherein the processor may perform a task such as identification using the object detection model.

In one implementation, the cleaning device 10 may send the observed environmental data to the control device 20, and the control device 20 may perform a task such as identification using an object detection model. In this way, the cleaning device 10 does not need to perform the identification task, thereby reducing power consumption of the cleaning device 10.

In one implementation, the cleaning system may further comprise an acquisition device 30. The acquisition device 30 may comprise a camera, for example, a fixed observation device such as an environmental surveillance camera, a smart doorbell camera, a camera built into a smart home appliance, etc. The acquisition device 30 may acquire environmental data from a viewing angle different from that of the cleaning device 10. The acquisition device 30 may communicate with at least one of the cleaning device 10 and the control device 20 in a wired or wireless network communication mode, so that the acquisition device 30 may send the acquired environmental data to the cleaning device 10 or the control device 20, and receive an instruction sent by the cleaning device 10 or the control device 20.

The acquisition device 30 may serve as the first observation device or the second observation device. When the acquisition device 30 serves as the first observation device, environmental data it acquires are the initial observation data; when the cleaning device 10 serves as the second observation device, environmental data it acquires after moving to a target observation position according to a supplementary observation strategy are the supplementary observation data. In some examples, multi-view fusion of environmental data acquired by the acquisition device 30 with environmental data acquired by the cleaning device 10 may be performed to improve accuracy of contaminant identification in an occluded or long-distance scene.

FIG. 2 is a schematic architectural diagram of the control device 20 in the cleaning system according to an embodiment of the present disclosure. As shown in FIG. 2, the control device 20 in the present disclosure may have a plurality of implementations.

In one implementation, as shown in (a) of FIG. 2, the control device 20 may be a local device 21 in the target environment. The local device 21 may be, for example, an artificial intelligence personal computer (AI PC), a smart speaker, a home gateway, a smart set-top box, etc. Taking the control device 20 being an AI PC as an example, a large language model (LLM) may be deployed in the AI PC, and the LLM may be used to perform at least one of tasks such as contaminant identification, credibility evaluation, supplementary observation strategy generation, and cleaning strategy generation.

In one implementation, as shown in (b) of FIG. 2, the control device 20 may be a server 22 in the cloud. A large language model may be deployed in the server 22, so that at least one of tasks such as contaminant identification, credibility evaluation, supplementary observation strategy generation, and cleaning strategy generation may be performed in the server 22 in the cloud, without needing to deploy a computing device locally or without needing to deploy a high-computing-power computing device locally, thereby reducing the cost for the user to deploy the cleaning system.

In one implementation, as shown in (c) of FIG. 2, the control device 20 may adopt a cloud-local collaborative deployment mode, that is, the control device 20 may comprise a server 22 in the cloud and a local device 21. The local device 21 may communicate with the cloud device and the cleaning device 10. A large language model may be deployed to the server 22, which uses the large language model to perform a heavy inference task, such as at least one of contaminant identification, credibility evaluation, supplementary observation strategy generation, and cleaning strategy generation. An object detection model may be deployed to the local device 21, which uses the object detection model to perform a lightweight task such as contaminant identification.

In one implementation, the cleaning device 10 and the control device 20 may together constitute an agent system. The cleaning device 10 senses the target environment through the sensor unit 11 to obtain environmental data, and performs a cleaning task through the actuator 12, corresponding to a perception unit and an execution unit of the agent system. The control device 20 performs at least one of tasks such as contaminant identification, credibility evaluation, supplementary observation strategy generation, and cleaning strategy generation based on the environmental data reported by the cleaning device 10, and sends an obtained decision-making result to the cleaning device 10, corresponding to a decision-making unit of the agent system. Data exchange is performed between the cleaning device 10 and the control device 20 through the communication unit 13 and a wired or wireless network communication mode, thereby achieving a collaborative closed loop of perception, decision-making, and execution.

### Exemplary Method

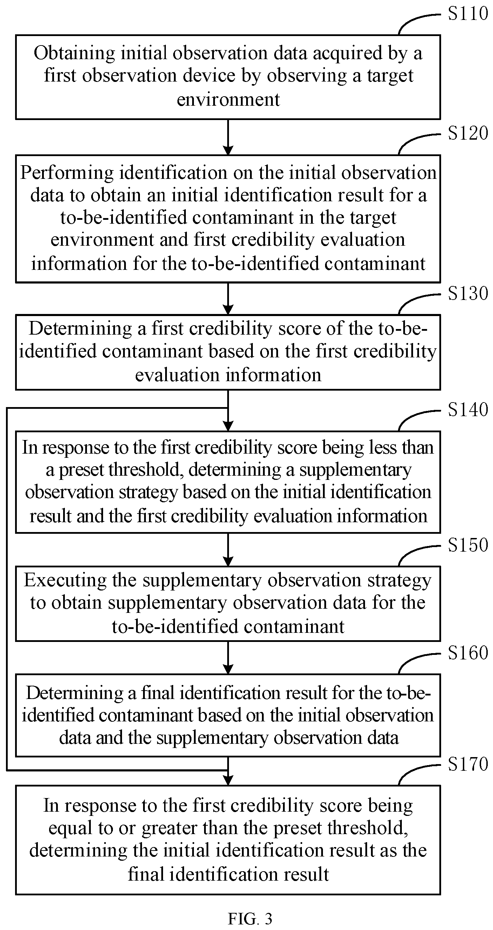

FIG. 3 is a schematic flowchart of a contaminant identification method according to an embodiment of the present disclosure. The method may be executed by a control device, by a cleaning device, or collaboratively by at least two of a control device, an acquisition device, and a cleaning device. The contaminant identification method according to embodiments of the present disclosure is exemplarily described below with reference to FIG. 3.

As shown in FIG. 3, in one embodiment, the method comprises steps S110 to S170 as follows.

S110, Obtaining initial observation data acquired by a first observation device by observing a target environment
The target environment refers to an environment in which a cleaning device needs to perform a cleaning task, and may comprise, for example, the floor of a place such as a home, an office, a shopping mall, a restaurant, a hospital, etc. The initial observation data refers to data obtained by the first observation device observing the target environment.

In one implementation, the initial observation data may comprise at least one of an environmental image and sensor data acquired by the first observation device.

In one implementation, the first observation device may be the cleaning device 10 or the acquisition device 30. Accordingly, the initial observation data may be acquired using the cleaning device 10, or the initial observation data may be acquired using the acquisition device 30 in the target environment.

In one implementation, after acquiring the initial observation data, preprocessing may also be performed on the initial observation data; for example, denoising, white balance correction, exposure compensation, etc., may be performed on the acquired environmental image, to improve accuracy of subsequent identification.

S120, Performing identification on the initial observation data to obtain an initial identification result for a to-be-identified contaminant in the target environment and first credibility evaluation information for the to-be-identified contaminant
The first credibility evaluation information refers to information for evaluating a degree of credibility of the initial identification result.

In one implementation, the first credibility evaluation information may comprise credibility evaluation parameters corresponding to a plurality of dimensions. In this way, the first credibility evaluation information may reflect the credibility of the initial identification result from a plurality of dimensions.

Exemplarily, the credibility evaluation parameters corresponding to the plurality of dimensions comprise at least one of a size of the to-be-identified contaminant, an image resolution for the to-be-identified contaminant, an occlusion ratio of the to-be-identified contaminant, a lighting condition of the to-be-identified contaminant, a stability of the to-be-identified contaminant in the initial identification result, a consistency between the initial identification result and a historical identification result for the to-be-identified contaminant, and a viewing-angle coverage ratio of the to-be-identified contaminant.

The stability of the to-be-identified contaminant in the initial identification result characterizes whether the to-be-identified contaminant can be stably identified from the initial observation data. Taking the initial observation data comprising a plurality of frames of environmental images as an example, the more environmental images from which the to-be-identified contaminant can be identified, the higher the stability of the to-be-identified contaminant in the initial identification result; the fewer environmental images from which the to-be-identified contaminant can be identified, the lower the stability of the to-be-identified contaminant in the initial identification result.

The consistency between the initial identification result and the historical identification result for the to-be-identified contaminant characterizes a degree of consistency between identification results for the same area of the target environment at different times, i.e., whether the same identification result is repeatedly obtained for the same area of the target environment.

The viewing-angle coverage ratio of the to-be-identified contaminant is a ratio of a viewing-angle range occupied by the to-be-identified contaminant in the environmental image to a total viewing-angle range of the environmental image.

In one implementation, the initial identification result may comprise one or more of information such as a category, a position, a boundary, and a confidence of the to-be-identified contaminant.

Exemplarily, an object detection model may be used to perform object detection on an environmental image in the initial observation data to obtain information such as the category, position, and confidence of the contaminant.

Exemplarily, the object detection model comprises, but is not limited to, models such as YouOnlyLookOnce (YOLO) and GroundingDINO.

Exemplarily, the category of the contaminant may comprise cat feces, vomit, liquid, glass shards, pills, oil stains, cat litter, etc.

S130, Determining a first credibility score of the to-be-identified contaminant based on the first credibility evaluation information
The first credibility score is a quantitative representation of the credibility of the initial identification result, reflecting an overall degree of reliability of the initial identification result. The higher the first credibility score is, the more credible the initial identification result; conversely, the lower the first credibility score is, the less credible the initial identification result.

In one implementation, the first credibility score may be computed according to a preset scoring rule based on the credibility evaluation parameters of the respective dimensions in the first credibility evaluation information.

An optional implementation of step S130 will be exemplarily described in a subsequent embodiment.

S140, In response to the first credibility score being less than a preset threshold, determining a supplementary observation strategy based on the initial identification result and the first credibility evaluation information
The preset threshold is a preset credibility judgment threshold for determining whether the initial identification result is credible. When the first credibility score is less than the preset threshold, it indicates that the initial identification result is not credible or has uncertainty, requiring further confirmation. When the first credibility score is equal to or greater than the preset threshold, it indicates that the initial identification result is credible, in which case, the initial identification result may be taken as the final identification result for the to-be-identified contaminant.

The supplementary observation strategy refers to an observation scheme formulated for obtaining supplementary observation data, comprising which observation device to use and what parameter to use for observation. The supplementary observation strategy may be determined based on the initial identification result and the first credibility evaluation information; for example, the supplementary observation strategy is formulated in a targeted manner according to a currently identified contaminant position and a weak dimension reflected by the credibility evaluation parameters.

In one implementation, the preset threshold may be dynamically adjusted according to an environmental condition.

Exemplarily, in a high-risk area such as a kitchen and a bathroom, the preset threshold may be increased to ensure that any suspected contamination in that area is fully confirmed before being cleared.

An optional implementation of step S140 will be exemplarily described in a subsequent embodiment.

S150, Executing the supplementary observation strategy to obtain supplementary observation data for the to-be-identified contaminant
The supplementary observation data refer to new observation data obtained by observing according to the supplementary observation strategy. An observation angle, an observation distance, an observation resolution, etc., corresponding to the supplementary observation data may be different from those for the initial observation data. Exemplarily, the supplementary observation data may comprise at least one of an environmental image and sensor data acquired by a second observation device. The first observation device and the second observation device are the same or different.

S160, Determining a final identification result for the to-be-identified contaminant based on the initial observation data and the supplementary observation data
The final identification result refers to a contaminant identification result determined by integrating the initial observation data and the supplementary observation data, and its accuracy and reliability are higher than those of an identification result based solely on the initial observation data.

In one implementation, data fusion may be performed on the initial observation data and the supplementary observation data, and identification may be performed again based on the fused data to obtain the final identification result.

An optional implementation of step S160 will be exemplarily described in a subsequent embodiment.

S170, In response to the first credibility score being equal to or greater than the preset threshold, determining the initial identification result as the final identification result
When the first credibility score is equal to or greater than the preset threshold, it indicates that the initial identification result is sufficiently credible, that the to-be-identified contaminant is a real contaminant, and that there is no need to perform supplementary observation on the to-be-identified contaminant. Therefore, the initial identification result may be determined as the final identification result, and information such as the type, position, and boundary of the contaminant may be output.

In the technical solution according to embodiments of the present disclosure, by obtaining initial observation data acquired by a first observation device by observing a target environment, performing identification on the initial observation data to obtain an initial identification result for a to-be-identified contaminant and first credibility evaluation information, then determining a first credibility score based on the first credibility evaluation information, and in response to the first credibility score being less than a preset threshold, determining a supplementary observation strategy based on the initial identification result and the first credibility evaluation information, executing the supplementary observation strategy to obtain supplementary observation data, and finally determining a final identification result based on the initial observation data and the supplementary observation data, supplementary observation data are actively obtained to determine a final identification result when credibility of the initial identification is insufficient, overcoming the problem of low identification accuracy caused by factors such as ambient lighting and line-of-sight occlusion at a single observation viewing angle, effectively improving accuracy and reliability of contaminant identification.

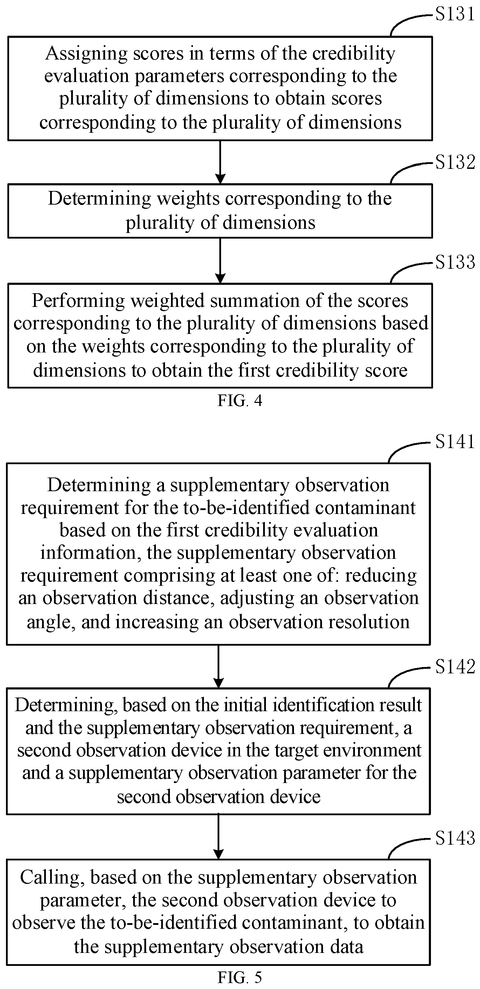

FIG. 4 is a schematic flowchart of step S130 of the contaminant identification method according to an embodiment of the present disclosure. As shown in FIG. 4, in one embodiment, the above step S130 may comprise steps S131 to S133 as follows.

S131, Assigning scores in terms of the credibility evaluation parameters corresponding to the plurality of dimensions to obtain scores corresponding to the plurality of dimensions
In one implementation, a correspondence between the credibility evaluation parameters corresponding to the plurality of dimensions and the scores may be preset, and the scores corresponding to the plurality of dimensions may be obtained based on the correspondence. The range of the scores corresponding to the dimensions may be between 0 and 1, or other ranges, which is not specifically limited here.

Exemplarily, a correspondence between the size of the to-be-identified contaminant and the score may be preset. The larger the size of the to-be-identified contaminant is, the higher the score; conversely, the smaller the size of the to-be-identified contaminant is, the lower the score.

Exemplarily, a correspondence between the image resolution for the to-be-identified contaminant and the score may be preset. The higher the image resolution for the to-be-identified contaminant is, the higher the score; conversely, the lower the image resolution for the to-be-identified contaminant is, the lower the score.

Exemplarily, a correspondence between the occlusion ratio of the to-be-identified contaminant and the score may be preset. The higher the occlusion ratio of the to-be-identified contaminant is, the lower the score; conversely, the lower the occlusion ratio of the to-be-identified contaminant is, the higher the score.

Exemplarily, a correspondence between the lighting condition of the to-be-identified contaminant and the score may be preset. The better the lighting condition of the to-be-identified contaminant is, the higher the score; conversely, the worse the lighting condition of the to-be-identified contaminant is, the lower the score.

Exemplarily, a correspondence between the score and the consistency between the initial identification result and the historical identification result for the to-be-identified contaminant may be preset. The more consistent the initial identification result is with the historical identification result for the to-be-identified contaminant, the higher the score; conversely, the less consistent the initial identification result is with the historical identification result for the to-be-identified contaminant, the lower the score.

Exemplarily, a correspondence between the viewing-angle coverage ratio of the to-be-identified contaminant and the score may be preset. The higher the viewing-angle coverage ratio of the to-be-identified contaminant is, the higher the score; conversely, the lower the viewing-angle coverage ratio of the to-be-identified contaminant is, the lower the score.

S132, Determining weights corresponding to the plurality of dimensions
The weights characterize weights of the scores corresponding to the plurality of dimensions in the first credibility score. The weights of different dimensions may be the same or different, and the weights may be set as needed.

In one implementation, the weights may be dynamically adjusted based on false positive and false negative statistics in a historical cleaning record. Exemplarily, if historical data indicate that shadow interference is a major source of false positives in a certain home environment, the weights of the two dimensions, namely, the lighting condition of the to-be-identified contaminant and the stability of the to-be-identified contaminant in the initial identification result, are increased, so that the first credibility score pays more attention to these two dimensions that tend to cause an erroneous identification result.

S133, Performing weighted summation of the scores corresponding to the plurality of dimensions based on the weights corresponding to the plurality of dimensions to obtain the first credibility score
The weighted summation refers to accumulating the scores corresponding to the dimensions weighted by their respective weights to obtain the first credibility score reflecting the overall credibility.

In one implementation, the mode of computing the first credibility score may be as shown in the following formula:
${Score}_{1} = {\sum }_{i = 1}^{n} {w}_{i} \times {s}_{i} ,$
wherein *wᵢ* represents the weight corresponding to the i-th dimension among the n dimensions, *sᵢ* represents the score corresponding to the i-th dimension among the n dimensions, and Score₁ represents the first credibility score.

In the technical solution according to embodiments of the present disclosure, by assigning scores respectively in terms of the credibility evaluation parameters corresponding to a plurality of dimensions and performing weighted summation to obtain the first credibility score, the credibility evaluation takes into account a plurality of influencing factors, which can more accurately reflect the true degree of reliability of the initial identification result, providing an accurate basis for deciding whether to subsequently trigger supplementary observation, thereby improving accuracy of contaminant identification.

FIG. 5 is a schematic flowchart of step S140 of the contaminant identification method according to an embodiment of the present disclosure. As shown in FIG. 5, in one embodiment, the supplementary observation strategy may comprise steps S141 to S143 as follows. Executing steps S141 to S143 as follows may implement step S140 to obtain supplementary observation data for the to-be-identified contaminant.

S141, Determining a supplementary observation requirement for the to-be-identified contaminant based on the first credibility evaluation information, the supplementary observation requirement comprising at least one of: reducing an observation distance, adjusting an observation angle, and increasing an observation resolution

In one implementation, at least one weak dimension that mainly causes the first credibility score to be less than the preset threshold may be determined based on the credibility evaluation parameters corresponding to the plurality of dimensions in the first credibility evaluation information, and then at least one supplementary observation requirement may be determined based on the at least one weak dimension.

Exemplarily, after assigning scores in terms of the credibility evaluation parameters corresponding to the plurality of dimensions to obtain scores corresponding to the plurality of dimensions, at least one weak dimension may be determined based on the scores corresponding to the plurality of dimensions. For example, a dimension getting a score less than a preset score threshold is taken as a weak dimension, or the scores corresponding to the plurality of dimensions are ranked from low to high or from high to low, and at least one dimension with a relatively low score is selected as a weak dimension according to the ranking result.

Exemplarily, the number of weak dimensions may be preset or dynamically determined based on the scores corresponding to the plurality of dimensions, which is not specifically limited here.

Exemplarily, if the weak dimension is the size of the to-be-identified contaminant, a smaller observation distance or a higher observation resolution is needed. Therefore, the supplementary observation requirement may comprise at least one of reducing the observation distance and increasing the observation resolution.

Exemplarily, if the weak dimension is occlusion of the to-be-identified contaminant, the observation angle needs to be adjusted. Therefore, the supplementary observation requirement may comprise adjusting the observation angle.

S142, Determining, based on the initial identification result and the supplementary observation requirement, a second observation device in the target environment and a supplementary observation parameter for the second observation device
The second observation device refers to a device for performing supplementary observation, which may be the cleaning device 10 or the acquisition device 30. The supplementary observation parameter refers to a specific parameter required by the second observation device to perform supplementary observation, exemplarily, at least one of a target observation position, a target observation direction, a target observation resolution, and a target observation magnification.

The first observation device and the second observation device may be the same. Exemplarily, both the initial observation and the supplementary observation are completed by the cleaning device 10, and after the initial observation, the cleaning device 10 performs supplementary observation based on the supplementary observation parameter.

The first observation device and the second observation device may also be different. Exemplarily, the initial observation is completed by the acquisition device 30 (e.g., a fixed camera), and the supplementary observation is completed by the cleaning device 10.

An optional implementation of step S142 will be exemplarily described in a subsequent embodiment.

S143, Calling, based on the supplementary observation parameter, the second observation device to observe the to-be-identified contaminant, to obtain the supplementary observation data
Calling the second observation device refers to controlling the second observation device to perform an observation action according to the supplementary observation parameter, thereby obtaining the supplementary observation data.

In one implementation, the mode of calling the second observation device is related to the type of the second observation device. When the second observation device is a movable observation device, it first needs to be controlled to move to a target observation position before observation. When the second observation device is an immovable observation device, observation is performed by adjusting the orientation of an observation sensor thereof, etc.

An optional implementation of step S143 will be exemplarily described in a subsequent embodiment.

In the technical solution according to embodiments of the present disclosure, by determining the supplementary observation requirement based on the first credibility evaluation information, determining the second observation device and its supplementary observation parameter based on the initial identification result and the supplementary observation requirement, and then calling the second observation device to obtain supplementary observation data, the supplementary observation may acquire new observation data targeting weak credibility, thereby improving accuracy of contaminant identification.

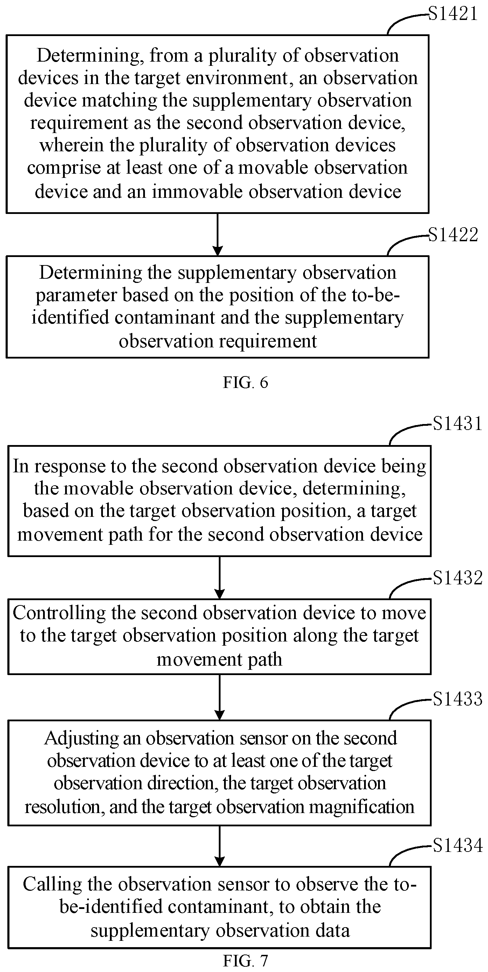

FIG. 6 is a schematic flowchart of step S142 of the contaminant identification method according to an embodiment of the present disclosure. As shown in FIG. 6, in one embodiment, the above step S142 may comprise steps S1421 to S1422 as follows.

S1421, Determining, from a plurality of observation devices in the target environment, an observation device matching the supplementary observation requirement as the second observation device, wherein the plurality of observation devices comprise at least one of a movable observation device and an immovable observation device
A plurality of observation devices, comprising a movable observation device and an immovable observation device, may be deployed in the target environment. A movable observation device is for example a mobile device such as a robot vacuum, a robot vacuum and mop, a patrol robot, etc. An immovable observation device is for example an environmental surveillance camera, a smart doorbell camera, a camera built into a smart home appliance, etc.

In one implementation, a device matching the supplementary observation requirement is selected from the plurality of observation devices as the second observation device, comprehensively considering factors such as the device's position, sensor configuration, battery level, moving speed, and current task status during the matching.

Exemplarily, when there are a plurality of movable observation devices, an optimal scheduling scheme is determined based on current position, battery level, moving speed, sensor configuration, and current task status of each of the devices, and a device taking the shortest time to reach the target position without affecting its own existing task is preferentially selected as the second observation device.

Exemplarily, when there are a plurality of immovable observation devices, an immovable observation device is preferentially determined as the second observation device. When the immovable observation devices cannot meet the supplementary observation requirement, a movable observation device is then scheduled, to reduce scheduling overhead and energy consumption in relation to the movable observation device.

S1422, Determining the supplementary observation parameter based on the position of the to-be-identified contaminant and the supplementary observation requirement
The supplementary observation parameter is a specific observation parameter determined based on a contaminant position and the supplementary observation requirement, for guiding the second observation device to perform supplementary observation.

In one implementation, in response to the second observation device being the movable observation device, the supplementary observation parameter comprises a target observation position, a target observation direction, a target observation resolution, and a target observation magnification. In response to the second observation device being the immovable observation device, the supplementary observation parameter comprises a target observation resolution and a target observation magnification.

The target observation position refers to an observation position to which the movable observation device should move. The target observation direction is an orientation the observation sensor should assume, such as a pitch angle and a horizontal angle. The target observation resolution refers to a resolution that the observation sensor should adopt. The target observation magnification refers to a magnification factor that the observation sensor should adopt. Since a movable observation device is capable of changing its own position, its supplementary observation parameter comprises the target observation position and the target observation direction, so as to observe from optimal position and angle. Since an immovable observation device has a fixed position and may only observe by adjusting the orientation and parameter of its observation sensor, its supplementary observation parameter does not comprise the target observation position, but may comprise the target observation resolution and the target observation magnification.

In the technical solution according to embodiments of the present disclosure, by selecting a device matching the supplementary observation requirement from a plurality of observation devices as the second observation device, and determining the supplementary observation parameter based on the contaminant position and the supplementary observation requirement, the selection of the supplementary observation device and the parameter configuration may fit an actual observation requirement, thereby improving quality of the supplementary observation data, thus improving accuracy of contaminant identification.

FIG. 7 is a schematic flowchart of step S143 of the contaminant identification method according to an embodiment of the present disclosure. As shown in FIG. 7, in one embodiment, in response to the second observation device being the movable observation device, the above step S143 may comprise steps S1431 to S1434 as follows.

S1431, In response to the second observation device being the movable observation device, determining, based on the target observation position, a target movement path for the second observation device
The target movement path refers to a path for the second observation device to move from its current position to the target observation position. In one implementation, an A* algorithm may be used to compute a passable path from the current position of the device to the target observation position, and a path with a minimum path cost is selected from any passable path as the target movement path. A path cost comprises a path length, a number of turns, an obstacle density in a traversed area, etc.

S1432, Controlling the second observation device to move to the target observation position along the target movement path
Controlling the second observation device to move refers to driving a traveling mechanism of the second observation device according to the target movement path, so that the device moves from the current position to the target observation position.

S1433, Adjusting an observation sensor on the second observation device to at least one of the target observation direction, the target observation resolution, and the target observation magnification
In one implementation, a pan-tilt or chassis on the second observation device may be controlled to rotate to adjust the observation sensor to the target observation direction, and at least one of the target observation resolution and the target observation magnification may be set by adjusting a parameter such as a focal length of the observation sensor.

S1434, Calling the observation sensor to observe the to-be-identified contaminant, to obtain the supplementary observation data
Calling the observation sensor refers to controlling the observation sensor to aim at the to-be-identified contaminant to acquire an image or video, thereby obtaining the supplementary observation data.

In one implementation, if a dynamic obstacle such as a pet or person is detected during observation, the device may continue acquisition after waiting in place for a preset duration or the dynamic obstacle leaves.

In the technical solution according to embodiments of the present disclosure, when the second observation device is a movable observation device, by determining the target movement path, controlling the device to move to the target observation position, adjusting an observation sensor parameter, and calling the observation sensor to observe, supplementary observation data are acquired from optimal position and angle, thereby improving accuracy of contaminant identification.

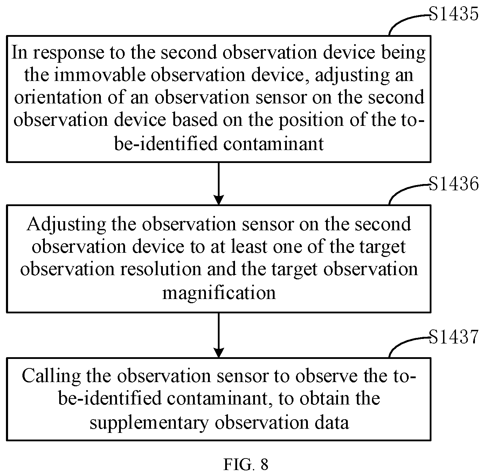

FIG. 8 is another schematic flowchart of step S143 of the contaminant identification method according to an embodiment of the present disclosure. As shown in FIG. 8, in one embodiment, in response to the second observation device being the immovable observation device, the above step S143 may comprise steps S1435 to S1437 as follows.

S1435, In response to the second observation device being the immovable observation device, adjusting an orientation of an observation sensor on the second observation device based on the position of the to-be-identified contaminant
The immovable observation device has a fixed position and cannot move to change the observation position, but may be aimed at the to-be-identified contaminant by rotating a pan-tilt or adjusting the orientation of the observation sensor.

In one implementation, a pitch angle and a horizontal angle of the observation sensor are computed based on the position of the to-be-identified contaminant in the target environment and an installation position of the observation device, and the orientation of the observation sensor is adjusted based on the pitch angle and the horizontal angle so that the observation sensor is aimed at the to-be-identified contaminant.

S1436, Adjusting the observation sensor on the second observation device to at least one of the target observation resolution and the target observation magnification
In one implementation, the observation sensor on the second observation device may be adjusted to at least one of the target observation resolution and the target observation magnification by adjusting a focal length of the observation sensor, thereby obtaining a higher-resolution and close-up image of the contaminant without moving the device.

S1437, Calling the observation sensor to observe the to-be-identified contaminant, to obtain the supplementary observation data
Calling the observation sensor to observe the to-be-identified contaminant refers to controlling the observation sensor, with an observation parameter thereof adjusted, to acquire an image or video of the to-be-identified contaminant, thereby obtaining the supplementary observation data.

In one implementation, a plurality of frames of images of the to-be-identified contaminant may be acquired, and timestamps and the position of the second observation device in the target environment may be recorded, for subsequent multi-view fusion.

In the technical solution according to embodiments of the present disclosure, when the second observation device is an immovable observation device, by adjusting the orientation, observation resolution, and observation magnification of the observation sensor based on the position of the to-be-identified contaminant, and calling the observation sensor to perform supplementary observation on the to-be-identified contaminant, supplementary observation data for the to-be-identified contaminant are obtained using the immovable observation device, thereby improving accuracy of contaminant identification.

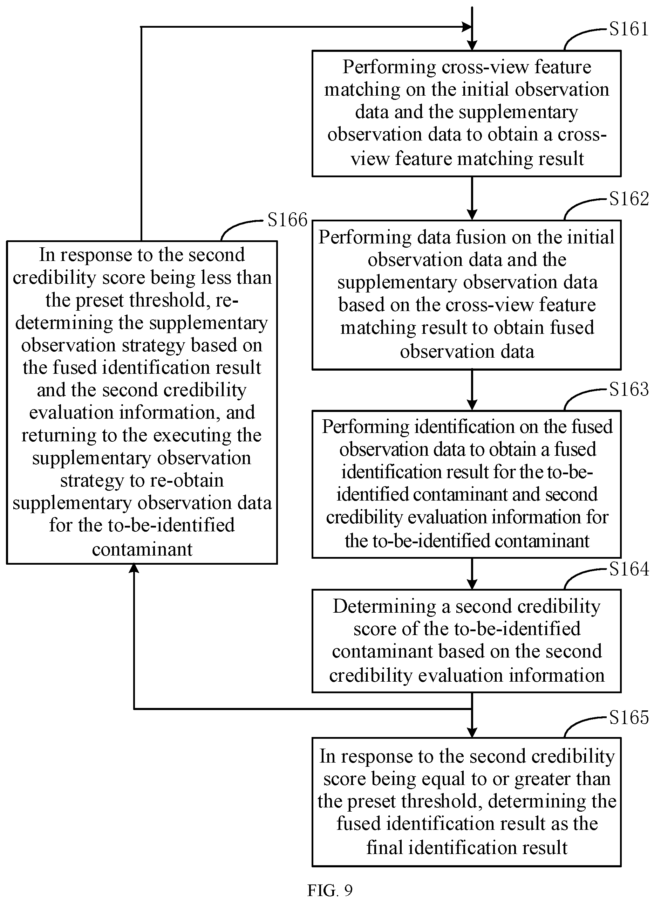

FIG. 9 is a schematic flowchart of step S160 of the contaminant identification method according to an embodiment of the present disclosure. As shown in FIG. 9, in one embodiment, the above step S160 may comprise steps S161 to S166 as follows.

S161, Performing cross-view feature matching on the initial observation data and the supplementary observation data to obtain a cross-view feature matching result
Cross-view feature matching refers to aligning features of the initial observation data and the supplementary observation data acquired from different viewing angles to establish a correspondence between the two sets of data.

In one implementation, temporal alignment may be performed on the initial observation data and the supplementary observation data based on timestamps, and spatial alignment may be performed on the initial observation data and the supplementary observation data based on positions and observation angles of the first observation device and the second observation device in the target environment. Then, feature matching is performed on the temporally and spatially aligned initial observation data and supplementary observation data to obtain the cross-view feature matching result.

S162, Performing data fusion on the initial observation data and the supplementary observation data based on the cross-view feature matching result to obtain fused observation data
Data fusion refers to merging the feature-matched initial observation data and supplementary observation data into unified fused observation data, so as to comprehensively utilize multi-view information.

In one implementation, different weights may be given to different observation data and supplementary observation data. For example, the weight of close-range, high-resolution observation data is greater than the weight of long-range, low-resolution observation data; the weight of observation data not occluded by any obstacle is greater than the weight of observation data occluded by an obstacle; and the weight of observation data containing depth information is greater than the weight of observation data with no depth information.

S163, Performing identification on the fused observation data to obtain a fused identification result for the to-be-identified contaminant and second credibility evaluation information for the to-be-identified contaminant
The fused identification result refers to a result obtained by performing identification again based on the fused observation data.

In one implementation, the fused identification result may comprise one or more of information such as a category, a position, a boundary, and a confidence of the to-be-identified contaminant.

The second credibility evaluation information refers to information for evaluating a degree of credibility of the fused identification result.

In one implementation, the second credibility evaluation information may comprise credibility evaluation parameters corresponding to a plurality of dimensions. In this way, the second credibility evaluation information may reflect the credibility of the fused identification result from a plurality of dimensions. For a mode of determining the second credibility evaluation information, one may refer to a mode of determining the first credibility evaluation information, which is not repeated here.

S164, Determining a second credibility score of the to-be-identified contaminant based on the second credibility evaluation information
The second credibility score is a quantitative representation of the credibility of the fused identification result, reflecting an overall degree of reliability of the fused identification result. The higher the second credibility score is, the more credible the fused identification result; conversely, the lower the second credibility score is, the less credible the fused identification result. For a mode of computing the second credibility score, one may refer to a mode of computing the first credibility score, which is not repeated here.

S165, In response to the second credibility score being equal to or greater than the preset threshold, determining the fused identification result as the final identification result
When the second credibility score is equal to or greater than the preset threshold, it indicates that the fused identification result is sufficiently credible, that the to-be-identified contaminant is a real contaminant, and that the result may be determined as the final identification result, and information such as the type, position, and boundary of the contaminant may be output.

S166, In response to the second credibility score being less than the preset threshold, re-determining the supplementary observation strategy based on the fused identification result and the second credibility evaluation information, and returning to the executing the supplementary observation strategy to re-obtain supplementary observation data for the to-be-identified contaminant
When the second credibility score is still less than the preset threshold, it indicates that the fused identification result still has uncertainty, requiring further acquisition of supplementary observation data.

In one implementation, for a mode of re-determining the supplementary observation strategy, one may refer to step S140, which is not repeated here.

After re-determining the supplementary observation strategy, the flow returns to the aforementioned step S150 of executing the supplementary observation strategy to obtain supplementary observation data again, and redetermine the fused identification result based on the new supplementary observation data, forming an iterative cycle.

In the technical solution according to embodiments of the present disclosure, by performing cross-view feature matching and data fusion on the initial observation data and the supplementary observation data, then performing identification on the fused observation data and computing the second credibility score, and in response to the second credibility score being equal to or greater than the threshold, determining the fused identification result as the final identification result, multi-view fusion identification of the to-be-identified contaminant is achieved, thereby improving accuracy and reliability of contaminant identification. When the second credibility score is less than the preset threshold, by re-determining the supplementary observation strategy and iteratively executing supplementary observation, multi-round identification of the to-be-identified contaminant is achieved, thereby further improving accuracy and reliability of contaminant identification.

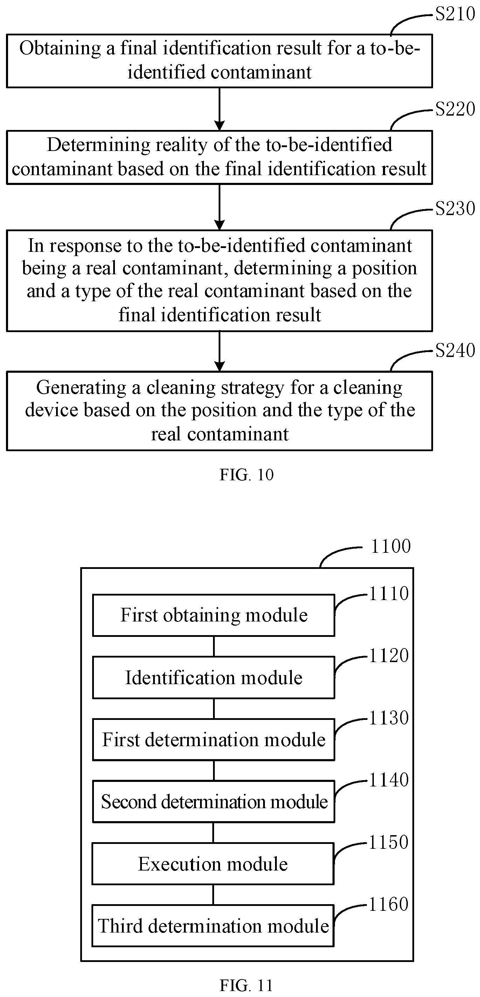

FIG. 10 is a schematic flowchart of a cleaning strategy generation method according to an embodiment of the present disclosure. The method may be executed by a control device, or collaboratively executed by a control device and a cleaning device. The cleaning strategy generation method according to embodiments of the present disclosure is exemplarily described below with reference to FIG. 10.

As shown in FIG. 10, in one embodiment, the method comprises steps S210 to S240 as follows.

S210, Obtaining a final identification result for a to-be-identified contaminant
The final identification result may be obtained through the contaminant identification method according to any of the foregoing embodiments. The final identification result comprises information such as the type, position, boundary, and confidence of the contaminant.

S220, Determining reality of the to-be-identified contaminant based on the final identification result
The reality of the to-be-identified contaminant refers to whether the to-be-identified contaminant is a real contaminant.

In one implementation, the reality of the to-be-identified contaminant may be determined based on a second credibility score corresponding to the final identification result. For example, when the second credibility score is equal to or greater than a preset threshold, the to-be-identified contaminant is determined to be a real contaminant.

S230, In response to the to-be-identified contaminant being a real contaminant, determining a position and a type of the real contaminant based on the final identification result
In one implementation, the position of the real contaminant may be represented by coordinates or a coordinate range of the contaminant in an environmental coordinate system, and the type of the real contaminant may comprise cat feces, vomit, liquid, glass shards, pills, oil stains, cat litter, etc.

S240, Generating a cleaning strategy for a cleaning device based on the position and the type of the real contaminant
The cleaning strategy refers to a cleaning behavior scheme formulated for the real contaminant, which may comprise a cleaning function strategy and a path planning strategy for the cleaning device, etc.

Exemplarily, the cleaning function strategy may comprise whether to enable a roller brush function, whether to enable a water suction function, whether to enable a water addition function, whether to enable a low-speed cleaning function, whether to enable a strong cleaning function, etc.

Exemplarily, the path planning strategy may comprise whether to detour around the contaminant, whether user confirmation of a cleaning path is required, etc.

In the technical solution according to embodiments of the present disclosure, by obtaining the final identification result for the to-be-identified contaminant, determining the reality of the to-be-identified contaminant; in response to the to-be-identified contaminant being a real contaminant, determining the position and type of the real contaminant, and then generating a cleaning strategy based on the position and type, the cleaning device may generate an adaptive cleaning strategy for the position and type of the real contaminant, avoiding erroneous removal of the contaminant and secondary contamination, thereby improving cleaning efficiency and cleaning effectiveness.

### Exemplary Apparatus

FIG. 11 is a schematic structural diagram of a contaminant identification apparatus according to an embodiment of the present disclosure. As shown in FIG. 11, in one embodiment, the apparatus 1100 comprises:
a first obtaining module 1110, configured to obtain initial observation data acquired by a first observation device by observing a target environment;
an identification module 1120, configured to perform identification on the initial observation data to obtain an initial identification result for a to-be-identified contaminant in the target environment and first credibility evaluation information for the to-be-identified contaminant;
a first determination module 1130, configured to determine a first credibility score of the to-be-identified contaminant based on the first credibility evaluation information;
a second determination module 1140, configured to, in response to the first credibility score being less than a preset threshold, determine a supplementary observation strategy based on the initial identification result and the first credibility evaluation information;
an execution module 1150, configured to execute the supplementary observation strategy to obtain supplementary observation data for the to-be-identified contaminant; and
a third determination module 1160, configured to determine a final identification result for the to-be-identified contaminant based on the initial observation data and the supplementary observation data.

In embodiments of the present disclosure, the modules of the contaminant identification apparatus may be deployed in a cleaning device, or in a control device, or distributedly deployed in a cleaning device and a control device. That is, the function implemented by the contaminant identification apparatus may be independently implemented by the cleaning device, independently implemented by the control device, or cooperatively implemented by the cleaning device and the control device, which is not limited in embodiments of the present disclosure.

For beneficial technical effects corresponding to an exemplary embodiment of the apparatus, reference may be made to the corresponding beneficial technical effects of the Exemplary Method section, which are not repeated here.

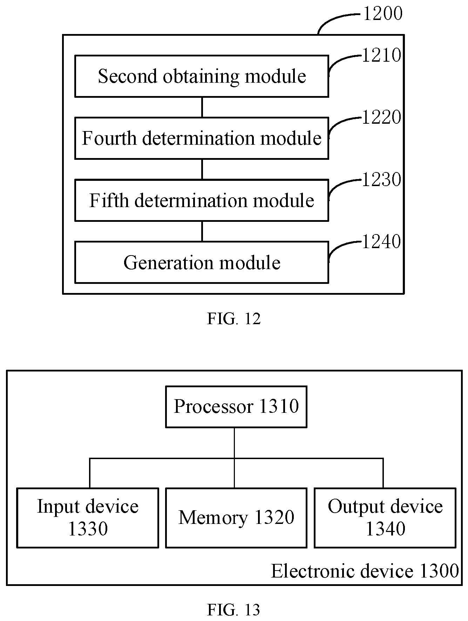

FIG. 12 is a schematic structural diagram of a cleaning strategy generation apparatus according to an embodiment of the present disclosure. As shown in FIG. 12, in one embodiment, the apparatus 1200 comprises:
a second obtaining module 1210, configured to obtain a final identification result for a to-be-identified contaminant according to the above contaminant identification method;
a fourth determination module 1220, configured to determine reality of the to-be-identified contaminant based on the final identification result;
a fifth determination module 1230, configured to, in response to the to-be-identified contaminant being a real contaminant, determine a position and a type of the real contaminant based on the final identification result; and
a generation module 1240, configured to generate a cleaning strategy for a cleaning device based on the position and the type of the real contaminant.

For beneficial technical effects corresponding to an exemplary embodiment of the apparatus, reference may be made to the corresponding beneficial technical effects of the Exemplary Method section, which are not repeated here.

### Exemplary Electronic Device

FIG. 13 is a schematic structural diagram of an electronic device according to an embodiment of the present disclosure. As shown in FIG. 13, in one embodiment, an electronic device 1300 comprises at least one processor 1310 and a memory 1320.

The processor 1310 may be a central processing unit (CPU), or a processing unit of another form having data processing capability and/or instruction execution capability, and may control another component in the electronic device 1300 to perform a desired function.

The memory 1320 may store one or more computer program products, which may comprise various forms of computer-readable storage media, such as volatile memory and/or non-volatile memory. Volatile memory may comprise, for example, random access memory (RAM) and/or cache, etc. Non-volatile memory may comprise, for example, read only memory (ROM), hard disk, flash memory, etc. One or more computer program instructions may be stored on the computer-readable storage medium, and the processor 1310 may run the one or more computer program instructions to implement the contaminant identification method and/or the cleaning strategy generation method of various embodiments of the present disclosure described above and/or other desired functions.

In an example, the electronic device 1300 may further comprise an input device 1330 and an output device 1340, and these components are interconnected through a bus system and/or other forms of connection mechanisms.

The input device 1330 may further comprise, for example, a keyboard, a mouse, etc.

The output device 1340 may output various information to the outside, and may comprise, for example, a display, a speaker, a printer, and a communication network and a remote output device connected thereto, etc.

Of course, for simplicity, FIG. 13 only shows some of the components of the electronic device 1300 that are related to the present disclosure, and components such as a bus, an input/output interface, etc., are omitted. In addition, depending on the specific application, the electronic device 1300 may further comprise any other appropriate components.

### Exemplary Computer Program Product and Computer-Readable Storage Medium

In addition to the above methods and devices, embodiments of the present disclosure may further provide a computer program product, comprising computer program instructions, wherein when executed by a processor, the computer program instructions cause the processor to perform steps in the contaminant identification method and/or the cleaning strategy generation method of various embodiments of the present disclosure as described in the Exemplary Method section.

The computer program product may be written in any combination of one or more programming languages for executing the operations of the embodiments of the present disclosure, the programming languages comprising object-oriented programming languages such as Java, C++, etc., and also comprising conventional procedural programming languages such as C language or similar programming languages. The program code may be executed entirely on a user computing device, partly on a user device, as a stand-alone software package, partly on a user computing device and partly on a remote computing device, or entirely on a remote computing device or server.

In addition, embodiments of the present disclosure may further be a computer-readable storage medium having stored thereon computer program instructions, which, when executed by a processor, cause the processor to perform steps in the contaminant identification method and/or the cleaning strategy generation method of various embodiments of the present disclosure as described in the Exemplary Method section.

The computer-readable storage medium may adopt any combination of one or more readable media. The readable medium may be a readable signal medium or a readable storage medium. The readable storage medium may comprise, but is not limited to, an electrical, magnetic, optical, electromagnetic, infrared, or semiconductor system, apparatus, or device, or any combination thereof. More specific examples of the readable storage medium comprise an electrical connection having one or more wires, a portable disk, a hard disk, a random access memory, a read only memory, an erasable programmable read only memory, an optical fiber, a portable compact disc read only memory, an optical storage device, a magnetic storage device, or any suitable combination of the foregoing.

The basic principles of the present disclosure have been described above in conjunction with specific embodiments. However, the advantages, benefits, effects, etc., mentioned in the present disclosure are merely examples and are not limiting, and should not be considered as essential to the various embodiments of the present disclosure. In addition, the specific details disclosed above are merely for the purpose of illustration and ease of understanding, and are not limiting. The above details do not limit the present disclosure to being necessarily implemented using the above specific details.

Those skilled in the art may make various changes and modifications to the present disclosure without departing from the spirit and scope of the present application. Thus, if these modifications and variations of the present application fall within the scope of the claims of the present disclosure and equivalent technologies thereof, the present disclosure is also intended to encompass these changes and variations.

## Claims

1. A contaminant identification method, comprising:
obtaining (S110) initial observation data acquired by a first observation device by observing a target environment;
performing (S120) identification on the initial observation data to obtain an initial identification result for a to-be-identified contaminant in the target environment and first credibility evaluation information for the to-be-identified contaminant;
determining (S130) a first credibility score of the to-be-identified contaminant based on the first credibility evaluation information;
in response to the first credibility score being less than a preset threshold, determining (S140) a supplementary observation strategy based on the initial identification result and the first credibility evaluation information;
executing (S150) the supplementary observation strategy to obtain supplementary observation data for the to-be-identified contaminant; and
determining (S160) a final identification result for the to-be-identified contaminant based on the initial observation data and the supplementary observation data.

2. The method according to claim 1, wherein the first credibility evaluation information comprises credibility evaluation parameters corresponding to a plurality of dimensions, and the determining (S130) a first credibility score of the to-be-identified contaminant based on the first credibility evaluation information comprises:
assigning (S131) scores in terms of the credibility evaluation parameters corresponding to the plurality of dimensions to obtain scores corresponding to the plurality of dimensions;
determining (S132) weights corresponding to the plurality of dimensions; and
performing (S133) weighted summation of the scores corresponding to the plurality of dimensions based on the weights corresponding to the plurality of dimensions to obtain the first credibility score.

3. The method according to claim 2, wherein the credibility evaluation parameters corresponding to the plurality of dimensions comprise at least one of a size of the to-be-identified contaminant, an image resolution for the to-be-identified contaminant, an occlusion ratio of the to-be-identified contaminant, a lighting condition of the to-be-identified contaminant, a stability of the to-be-identified contaminant in the initial identification result, a consistency between the initial identification result and a historical identification result for the to-be-identified contaminant, and a viewing-angle coverage ratio of the to-be-identified contaminant.

4. The method according to any one of claims 1 to 3, wherein the supplementary observation strategy comprises:
determining (S141) a supplementary observation requirement for the to-be-identified contaminant based on the first credibility evaluation information, the supplementary observation requirement comprising at least one of: reducing an observation distance, adjusting an observation angle, and increasing an observation resolution;
determining (S142), based on the initial identification result and the supplementary observation requirement, a second observation device in the target environment and a supplementary observation parameter for the second observation device, wherein the first observation device and the second observation device are the same or different; and
calling (S143), based on the supplementary observation parameter, the second observation device to observe the to-be-identified contaminant, to obtain the supplementary observation data.

5. The method according to claim 4, wherein the initial identification result comprises a position of the to-be-identified contaminant, and the determining (S142), based on the initial identification result and the supplementary observation requirement, a second observation device in the target environment and a supplementary observation parameter for the second observation device comprises:
determining (S1421), from a plurality of observation devices in the target environment, an observation device matching the supplementary observation requirement as the second observation device, wherein the plurality of observation devices comprise at least one of a movable observation device and an immovable observation device; and
determining (S1422) the supplementary observation parameter based on the position of the to-be-identified contaminant and the supplementary observation requirement.

6. The method according to claim 5, wherein
in response to the second observation device being the movable observation device, the supplementary observation parameter comprises a target observation position, a target observation direction, a target observation resolution, and a target observation magnification;
in response to the second observation device being the immovable observation device, the supplementary observation parameter comprises a target observation resolution and a target observation magnification.

7. The method according to claim 6, wherein the calling (S143), based on the supplementary observation parameter, the second observation device to observe the to-be-identified contaminant, to obtain the supplementary observation data comprises:
in response to the second observation device being the movable observation device, determining (S1431), based on the target observation position, a target movement path for the second observation device;
controlling (S1432) the second observation device to move to the target observation position along the target movement path;
adjusting (S1433) an observation sensor on the second observation device to at least one of the target observation direction, the target observation resolution, and the target observation magnification; and
calling (1434) the observation sensor to observe the to-be-identified contaminant, to obtain the supplementary observation data.

8. The method according to claim 6, wherein the calling (S143), based on the supplementary observation parameter, the second observation device to observe the to-be-identified contaminant, to obtain the supplementary observation data comprises:
in response to the second observation device being the immovable observation device, adjusting (S1435) an orientation of an observation sensor on the second observation device based on the position of the to-be-identified contaminant;
adjusting (S1436) the observation sensor on the second observation device to at least one of the target observation resolution and the target observation magnification; and
calling (S1437) the observation sensor to observe the to-be-identified contaminant, to obtain the supplementary observation data.

9. The method according to any one of claims 1 to 8, wherein the determining (S160) a final identification result for the to-be-identified contaminant based on the initial observation data and the supplementary observation data comprises:
performing (S161) cross-view feature matching on the initial observation data and the supplementary observation data to obtain a cross-view feature matching result;
performing (S162) data fusion on the initial observation data and the supplementary observation data based on the cross-view feature matching result to obtain fused observation data;
performing (S163) identification on the fused observation data to obtain a fused identification result for the to-be-identified contaminant and second credibility evaluation information for the to-be-identified contaminant;
determining (S164) a second credibility score of the to-be-identified contaminant based on the second credibility evaluation information; and
in response to the second credibility score being equal to or greater than the preset threshold, determining (S165) the fused identification result as the final identification result.

10. The method according to claim 9, further comprising: after the determining (S164) a second credibility score of the to-be-identified contaminant based on the second credibility evaluation information,
in response to the second credibility score being less than the preset threshold, re-determining (S166) the supplementary observation strategy based on the fused identification result and the second credibility evaluation information, and returning to the executing (S150) the supplementary observation strategy to obtain supplementary observation data for the to-be-identified contaminant.

11. A cleaning strategy generation method, comprising:
obtaining (S210) a final identification result for a to-be-identified contaminant according to the method of any one of claims 1 to 10;
determining (S220) reality of the to-be-identified contaminant based on the final identification result;
in response to the to-be-identified contaminant being a real contaminant, determining (S230) a position and a type of the real contaminant based on the final identification result; and
generating (S240) a cleaning strategy for a cleaning device based on the position and the type of the real contaminant.

12. A contaminant identification apparatus (1100), comprising:
a first obtaining module (1110), configured to obtain initial observation data acquired by a first observation device by observing a target environment;
an identification module (1120), configured to perform identification on the initial observation data to obtain an initial identification result for a to-be-identified contaminant in the target environment and first credibility evaluation information for the to-be-identified contaminant;
a first determination module (1130), configured to determine a first credibility score of the to-be-identified contaminant based on the first credibility evaluation information;
a second determination module (1140), configured to, in response to the first credibility score being less than a preset threshold, determine a supplementary observation strategy based on the initial identification result and the first credibility evaluation information;
an execution module (1150), configured to execute the supplementary observation strategy to obtain supplementary observation data for the to-be-identified contaminant; and
a third determination module (1160), configured to determine a final identification result for the to-be-identified contaminant based on the initial observation data and the supplementary observation data.

13. A cleaning strategy generation apparatus (1200), comprising:
a second obtaining module (1210), configured to obtain a final identification result for a to-be-identified contaminant according to the method of any one of claims 1 to 10;
a fourth determination module (1220), configured to determine reality of the to-be-identified contaminant based on the final identification result;
a fifth determination module (1230), configured to, in response to the to-be-identified contaminant being a real contaminant, determine a position and a type of the real contaminant based on the final identification result; and
a generation module (1240), configured to generate a cleaning strategy for a cleaning device based on the position and the type of the real contaminant.

14. A computer-readable storage medium, storing a computer program, wherein the computer program is configured to execute the contaminant identification method according to any one of claims 1 to 10, and/or the cleaning strategy generation method according to claim 11.

15. An electronic device (1300), comprising:
a processor (1310); and
a memory (1320) for storing processor-executable instructions,
wherein the processor (1310) is configured to read the executable instructions from the memory (1320) and execute the instructions to implement the contaminant identification method according to any one of claims 1 to 10, and/or the cleaning strategy generation method according to claim 11.
